# EUROPÄISCHE PATENTANMELDUNG

(11) **EP 2 515 018 A2**
(43) Veröffentlichungstag der Anmeldung: **24.10.2012**
(21) Anmeldenummer: 12002754.5
(22) Anmeldetag: 19.04.2012
(51) Int. Cl.: F16L 27/08, F16L 23/18

(54) **Dichtungssystem für Rohrdrehgelenke**

(30) Priorität: 19.04.2011 DE 102011018162
(71) Anmelder: SVT Gmbh, 58332 Schwelm (DE)
(72) Erfinder: Mertens, Klaus, 58640 Iserlohn (DE)
(74) Vertreter: Maxton Langmaack & Partner

(57) **Zusammenfassung**

Die vorliegende Erfindung betrifft ein Rohrdrehgelenk (11) zum Transport flüssiger Medien mit zumindest einer ersten und einer zweiten Drehhälfte, die zueinander abgedichtet drehbar angeordnet sind, wobei eine kreisförmig umlaufend angeordnete Dichtung (3) in einer umlaufend angeordneten Dichtungskammer auf einer Schräge einer ersten Fläche (4) angeordnet ist, an einer zweiten Fläche (5) anliegt, die gegenüberliegend zu der ersten Fläche (4) angeordnet ist, wobei die erste Fläche (4) zu der ersten Drehhälfte und die zweite Fläche (5) zu der zweiten Drehhälfte zugehörig ist, und mit einer dritten Fläche (6), die eine radiale Begrenzung für die umlaufend angeordnete Dichtung (3) bewirkt. Des Weiteren werden ein Verfahren für einen Zusammenbau eines derartigen Dichtungssystem wie auch ein Nachrüstsatz vorgeschlagen.

## Beschreibung

Die vorliegende Erfindung betrifft ein Rohrdrehgelenk zum Transport flüssiger Medien mit zumindest einer ersten und einer zweiten Drehhälfte, die zueinander abgedichtet drehbar angeordnet sind. Des Weiteren ist ein Verfahren zur Abdichtung einer ersten und einer zweiten Drehhälfte eines Rohrdrehgelenkes betroffen.

Rohrdrehgelenke werden eingesetzt, um eine sichere Abdichtung zu gewährleisten bei Rotationsbewegungen, wenn flüssige Medien durch das Rohrgelenk hindurchgeführt werden. Es ist bekannt, dass eine Axialabdichtung aus verschiedensten Werkstoffen genutzt wird, wobei der Werkstoff in Abhängigkeit von dem zu fördernden Produkt ausgewählt wird. Die genutzte Dichtung kann mit einem Innenüberdruck oder auch einem Innenunterdruck beaufschlagt sein. Dieses ist insbesondere davon abhängig, in welcher Weise das Rohrdrehgelenk eingesetzt wird. Eine bevorzugte Anwendung von Rohrdrehgelenken ergibt sich bei der Be- und Entladung von Schiffen, insbesondere von Tankschiffen. Derartige Rohrdrehgelenke können jedoch auch bei anderen Transporten zum Einsatz gelangen, sei es Schienentransporte oder aber Silotransporte.

Aufgabe der vorliegenden Erfindung ist es, ein Dichtungssystem für Rohrdrehgelenke zur Verfügung zu stellen, welches einen geringeren Bauaufwand bei gleichzeitig erhöhter Dichtigkeit zur Verfügung gestellt.

Diese Aufgabe wird mit einem Rohrdrehgelenk mit den Merkmalen des Anspruches 1 sowie mit einem Verfahren zur Abdichtung einer ersten und einer zweiten Drehhälfte eines Rohrdrehgelenkes zueinander mit den Merkmalen des Anspruches 7 gelöst. Weitere vorteilhafte Ausgestaltungen und Weiterbildungen gehen aus den jeweiligen nachfolgenden Unteransprüchen hervor. Die dort jeweils genannten Merkmale sind jedoch nicht auf die einzelne Ausgestaltung beschränkt. Vielmehr können ein oder mehrere dieser Merkmale mit weiteren anderen Merkmalen aus der nachfolgenden Beschreibung zu weiteren Ausgestaltungen verknüpft werden.

Es wird ein Rohrdrehgelenk zum Transport flüssiger Medien mit zumindest einer ersten und einer zweiten Drehhälfte vorgeschlagen, wobei die erste und die zweite Drehhälfte zueinander abgedichtet drehbar angeordnet sind. Hierfür ist eine kreisförmig umlaufend angeordnete Dichtung in einer umlaufend angeordneten Dichtungskammer angeordnet, wobei die Dichtungskammer eine dreiecksförmige Gestalt aufweist. Die Dichtung liegt zum Einen auf einer Schräge einer ersten Fläche auf. Zum anderen liegt die Dichtung liegt an einer zweiten Fläche an, die gegenüberliegend zu der ersten Fläche angeordnet ist. Die erste Fläche und die zweite Fläche sind zueinander in einem nichtrechtwinkligen Verhältnis zueinander angeordnet. Die erste Fläche ist zu der ersten Drehhälfte und die zweite Fläche zu der zweiten Drehhälfte zugehörig. Es ist des weiteren eine dritte Fläche vorhanden, die eine radiale Begrenzung für die umlaufend angeordnete Dichtung bewirkt. Die erste, zweite und dritte Fläche bilden zusammen die dreieckförmige Gestalt der Dichtungskammer. Die Dichtungskammer weist eine derartige dreicksförmige GEstalt auf, dass die Dichtung zwischen der ersten und der dritten Fläche positionsfest eingeklemmt ist, während die zweite Fläche für einer Relativbewegung zwischen der ersten und der zweiten Drehhälfte gleitfähig entlang der Dichtung angeordnet ist.

Das Dichtungssystem, welches die Schräge aufweist, ist vorteilhaft in der Fertigung. Bevorzugt ist die erste Fläche vollständig als Schräge ausgeführt. So kann beispielsweise die Fläche dadurch geschaffen werden, dass von einem Werkstück eine Abfräsung in einem Winkel von einer Senkrechten erfolgt, die die Schräge ergibt. Ein Winkel der Schräge kann insbesondere davon abhängen, welche Art der Druckübertragung vorliegt. Der Druck, der beispielsweise in Form eines Innenüber- oder Innenunterdruckes im Rohrdrehgelenk vorliegt, bedingt beispielweise eine eventuelle Verformung des Dichtungsringes. Durch Auswahl des Winkels der Schräge kann der wirkenden Druckkraft Rechnung getragen werden. Des weiteren hängt der Winkel beispielweise ebenfalls von der Größe des ausgewählten Dichtringes ab. Je nachdem, wie stark belastet eine abdichtende Fläche der Dichtung im Betrieb ist, kann mittels der Auswahl des Winkels eingestellt werden, wie die sich abdichtende Fläche sich nachher im Betrieb tatsächlich einstellt. So kann an unterschiedlichen Rohrdrehgelenken ein unterschiedlicher Winkel in Abhängigkeit von insbesondere unterschiedlichen Druckverhältnissen aber auch unterschiedlichen flüssigen Medien, die durch das Rohrdrehgelenk durchströmen, eingestellt werden.

Dadurch, dass die erste Fläche zu der ersten Drehhälfte zugehörig ist, während die zweite Fläche zu der zweiten Drehhälfte zugehörig ist, kann der Dichtungsring, der bevorzugt als Dichtung eingesetzt wird, zumindest annähernd ortsfest an der ersten Fläche verbleiben, während die zweite Fläche an dem Dichtungsring vorbei gleitet. Bevorzugt ist daher zwischen der ersten Fläche, insbesondere der Schräge und der Oberfläche der Dichtung eine bessere Haftkraft vorhanden als gegenüber der zweiten Fläche und der dort anliegenden Oberfläche der Dichtung.

Eine Weiterbildung sieht vor, dass als Dichtung eine O-Ringdichtung benutzt wird. Die O-Ringdichtung kann hierbei eine handelsübliche Dichtung sein. Es besteht jedoch ebenfalls die Möglichkeit, dass ein spezieller Werkstoff Verwendung findet, der insbesondere für das durch das Rohrdrehgelenk zu transportieren flüssige Medium nicht angreifbar ist. Die O-Dichtung kann daher beispielsweise säurebeständig, basenbeständig, besonders temperaturbeständig oder in sonstiger Weise für das zu transportierende flüssige Medium ausgelegt sein.

Die dritte Fläche stellt eine radiale Begrenzung für die umlaufend angeordnete Dichtung dar. Die dritte Fläche kann gemäß einer Ausgestaltung eine Wirkung dahingehend aufweisen, dass sie eine Begrenzung nach radial Außen zur Verfügung stellt. Gemäß einer anderen Ausgestaltung stellt die dritte Fläche eine radiale Begrenzung nach radial Innen zur Verfügung. Dieses hängt insbesondere davon ab, in welcher Art und Weise die Schräge der ersten Fläche in der Dichtungskammer angeordnet ist. Verläuft beispielsweise die Schräge radial von innen nach außen so, dass sich diese in die erste Drehhälfte hinein erstreckt, würde vorzugsweise die dritte Fläche dazu genutzt, dass sie eine radiale Begrenzung nach außen zur Verfügung stellt. Erstreckt sich hingegen die Schräge radial von innen nach außen so, dass sich diese in der ersten Drehhälfte von Innen nach Außen erstreckt, würde vorzugsweise die dritte Fläche genutzt werden, um eine Radialbegrenzung nach Innen zur Verfügung zu stellen.

Gemäß einer Ausgestaltung ist vorgesehen, dass die dritte Fläche zur ersten Drehhälfte zugehörig ist. Hierbei kann es so sein, dass die erste und die dritte Fläche jeweils an verschiedenen Werkstücken gefertigt worden sind. Diese Werkstücke werden anschließend zusammengesetzt und sind sodann in der ersten Drehhälfte angeordnet. Gemäß einer Ausgestaltung kann vorgesehen werden, dass die zweite Fläche eine bessere Oberflächengüte aufweist als die erste und/oder die dritte Fläche. Insbesondere weist diejenige Fläche eine bessere Oberflächengüte auf als benachbarte Flächen, die an der Dichtung gleitend sich vorbei bewegt. Die Oberflächengüte wird beispielweise maßgeblich durch eine geringere Rauhigkeit erzielt. Des Weiteren besteht die Möglichkeit, dass die Oberfläche dadurch eine zusätzliche Vergütung erhält, dass eine Beschichtung aufgetragen worden ist. Diese Beschichtung ist in der Lage, eine auftretende Reibung zu minimieren. Hierzu kann insbesondere eine Beschichtung mittels PTFE oder vergleichbaren Materialien genutzt werden. Auch besteht die Möglichkeit, durch Auswahl unterschiedlicher Materialien für die erste, zweite und/oder dritte Fläche der Dichtungskammer es zu ermöglichen, dass die zweite Fläche entlang der Dichtung gleitet, wenn die erste und die zweite Drehhälfte des Rohrdrehgelenks relativ zueinander sich verdrehen. So kann beispielweise die zweite Fläche einen höherwertigen Werkstoff aufweisen als die erste und die dritte Fläche. Auch besteht die Möglichkeit, dass nur ein Bereich der zweiten Fläche, nicht aber die gesamte zweite Fläche eine höhere Oberflächengüte aufweist. Der Bereich umfasst vorzugsweise eine Gleitfläche für die Dichtung, kann insbesondere hierauf beschränkt sein. Es besteht beispielsweise die Möglichkeit, dass nur in diesem Bereich eine Beschichtung und/oder eine besondere Oberflächenbearbeitung vorliegt. Auch kann die Gleitfläche in der zweiten Fläche beispielsweise durch einen Einsatz verwirklicht werden. Dieser Einsatz kann beispielweise einen Kunststoff aufweisen. Der Einsatz wird beispielweise in ein Werkstück eingesetzt, befestigt und bildet so zumindest zum Teil die zweite Fläche.

Bevorzugt ist die Dichtungskammer in Form eines Dreiecks gestaltet. Es ist vorgesehen, dass die Tiefe der Dreiecksform so ist, dass bei Einlegen der Dichtung diese in den aufeinander zustoßenden Flächen, insbesondere der ersten und der dritten Fläche geklemmt wird. Bevorzugt ist des Weiteren, wenn die Dichtung geklemmt über die Seitenfläche von erster und dritter Fläche hinausragt. Die zweite Fläche, die sodann in Kontakt mit der Dichtung gerät, verformt diese und bildet dadurch eine weitere Dichtungsfläche, zusätzlich zu derjenigen, die zwischen der ersten Fläche bzw. der dritten Fläche und der Dichtung jeweils schon durch Klemmung erfolgte Deformierung jeweils geschaffen wurde.

Eine weitere Ausgestaltung sieht vor, dass die dritte Fläche auch zu der zweiten Drehhälfte zugehörig sein kann. In diesem Falle kann die dritte Fläche aus dem gleichen Werkstück geschaffen worden sein wie die zweite Fläche. Bevorzugt ist es dann, dass die zweite und die dritte Fläche jeweils eine Oberflächengüte aufweisen, die höher ist als diejenige der ersten Fläche. Eine weitere Ausgestaltung sieht vor, dass die dritte Fläche trotz Zugehörigkeit zu der zweiten Drehhälfte in einem separaten Werkstück zu demjenigen Werkstück gefertigt wird, an dem die zweite Fläche geschaffen wird.

Bevorzugt ist zwischen der ersten und der zweiten Drehhälfte von einem Innendurchmesser aus ein Spalt radial nach außen im Rohrdrehgelenk verlaufend. Der Spalt führt zu der dreiecksförmigen Dichtungskammer, in der die Dichtung angeordnet ist. Die Dichtung verhindert durch ihre Anordnung einen Durchfluss des flüssigen Mediums, welches durch das Rohrdrehgelenk transportiert wird, durch Spalt über die Dichtungskammer hinaus.

Gemäß einem weiteren Gedanken der Erfindung wird ein Verfahren zur Abdichtung einer ersten und einer zweiten Drehhälfte eines Rohrdrehgelenkes zueinander vorgeschlagen, wobei das Rohrdrehgelenk zur Weiterleitung von flüssigen Medien eingesetzt wird, mit den folgenden Schritten:
- in eine erste Drehhälfte wird eine umlaufende Dichtung in eine dortige Ausnehmung eingesetzt, wobei die Ausnehmung eine erste Fläche mit einer Schräge und eine radiale Begrenzung aufweist, wobei die Dichtung zwischen der Schräge und der radialen Begrenzung eingepresst wird,
- die zweite Drehhälfte wird mit der ersten Drehhälfte verbunden, wobei die umlaufende Dichtung eine Presskraft erfährt und eine abdichtende Wirkung zwischen der ersten und der zweiten Drehhälfte entfaltet.

Eine Weiterbildung sieht vor, dass die umlaufende Dichtung zumindest im wesentlichen in ihrer eingeklemmt Position ortsfest verbleibt und die zweite Fläche auf ihr gleitet, wenn eine Relativbewegung zwischen der ersten und der zweiten Drehhälfte ausgeführt wird.

Durch das Verbinden von erster und zweiter Drehhälfte miteinander wird eine Dichtungskammer mit einer dreiecksförmigen Gestalt gebildet.

Die Auslegung des Verfahrens kann insbesondere auch davon abhängig sein, in welcher Art und Weise die konstruktive Ausgestaltung der Dichtungskammer erfolgt ist. So wie oben beschrieben, können verschiedene Dichtungskammer eingesetzt werden. Davon abhängig, kann die Anordnung der einzelnen Bauteile und der einzelnen Schritte sich voneinander unterscheiden. Bevorzugt wird für das vorgeschlagene Verfahren ein Rohrdrehgelenk wie oben beschrieben eingesetzt. Ebenso wird für das oben beschriebene Rohrdrehgelenk das vorgeschlagene Verfahren eingesetzt.

Des Weiteren wird ein Nachrüstsatz für ein Rohrdrehgelenk vorgeschlagen, wobei der Nachrüstsatz ein oder mehrere Bauteile umfasst, damit ein Rohrdrehgelenk mit einem Dichtungssystem ermöglicht ist, wie es oben beschreiben ist bzw. nachfolgend noch mit weiteren Einzelheiten und Versionen hervorgeht. Insbesondere können Flächen für die Dichtungskammer bildende Werkstücke, sonstige Elemente aber auch die Dichtung selbst vom Nachrüstsatz mitumfasst sein. Dieses ermöglich, dass bestehende Rohrdrehgelenke im Rahmen von Revisionen umgebaut, aber prinzipiell weiterbenutzt werden können.

Weitere vorteilhafte Ausgestaltungen und Weiterbildungen gehen aus der nachfolgenden Zeichnung hervor. In den einzelnen Figuren der Zeichnung sind unterschiedliche Merkmale angegeben, die jeweils jedoch nicht auf die einzelne Ausgestaltung beschränkt sind. Vielmehr besteht die Möglichkeit, dass ein oder mehrere dieser Merkmale mit ein oder mehreren Merkmalen aus anderen Figuren wie auch aus der obigen Beschreibung zu neuen Weiterbildungen verknüpft werden. Auch sind die aus den jeweiligen Figuren hervorgehenden Ausgestaltungen nur schematisch und erläuternd, ohne aber die Erfindung als solches zu beschränken. Es zeigen:
- Figur 1:: eine aus dem Stand der Technik bekannte Ausgestaltung einer Dichtung, die in einem Rohrdrehgelenk angeordnet ist,
- Figur 2:: eine erste Ausgestaltung einer Abdichtung unter Benutzung einer dreiecksförmige Gestalt einer Dichtungskammer,
- Figur 3:: eine weitere Ausgestaltung mit einer anderen geometrischen Anordnung einer dreiecksförmig gestalteten Dichtungskammer,
- Figur 4:: eine weitere Ausgestaltung eines Dichtungssystems, und
- Figur 5:: ein anderes Dichtungssystem.

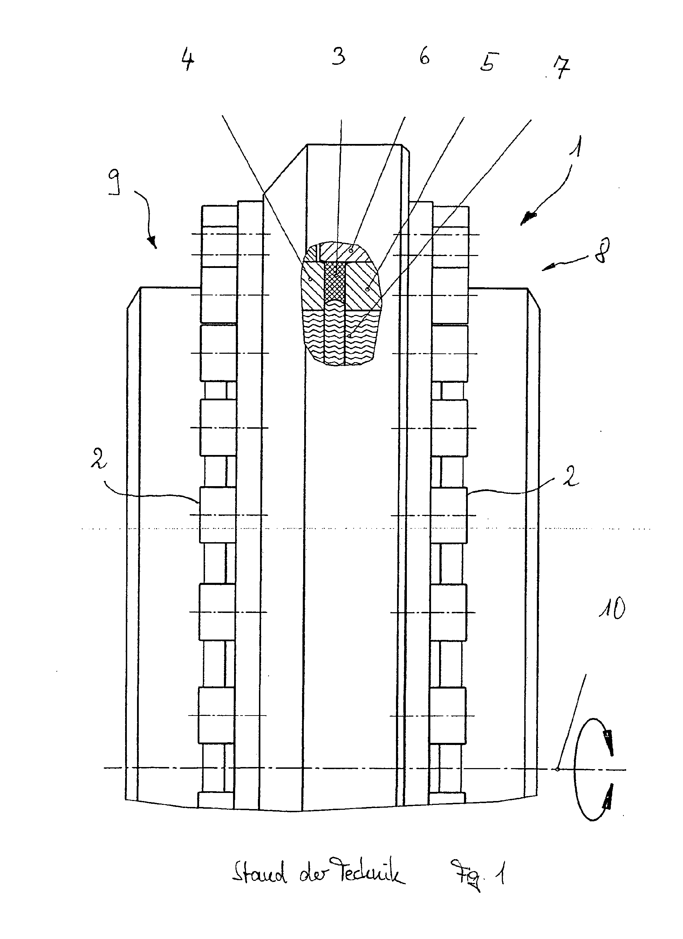

Figur 1 zeigt in schematischer Ansicht ein Rohrdrehgelenk 1, wie es aus dem Stand der Technik schon bekannt ist. Das Rohrdrehgelenk 1 weist flanschartige Verbindungen auf, die schematisch durch die Schrauben 2 angedeutet sind. Innerhalb des Rohrdrehgelenkes 1 ist eine Dichtung 3 angeordnet. Die Dichtung 3 kann an einer ersten Seite und an einer zweiten Seite gleiten, wobei die erste Seite durch ein erstes Werkstück 4 und die zweite Seite durch ein zweites Werkstück 5 dargestellt ist. Ein drittes Werkstück 6 stellt eine Radialbegrenzung für die Dichtung 3 dar. Die Dichtung 3 ist in der Regel eine Formdichtung, insbesondere eine an die spezielle Ausgestaltung der Werkstücke 4, 5, 6, aufwändig angepasst hergestellte Flachdichtung. In einem Inneren des Rohrdrehgelenkes 1 fließt ein flüssiges Medium 7. Das flüssige Medium 7 kann Feststoffteile aufweisen. Diese Feststoffteile sind in der Lage, die Dichtung 3 angreifen zu können. Des Weiteren weist diese Art des Dichtungssystems einige Schwachstellen auf, sofern über die Dichtung 3 ein Vakuum wirksam wird. Das Rohrdrehgelenk 1 ist in der Lage, eine Drehbewegung um eine Drehachse so zu ermöglichen, dass eine erste Drehhälfte 8 rotieren kann, während eine zweite Drehhälfte 9 beispielsweise in ihrer Position verbleibt. Dieses wird durch den Rotationspfeil um die Drehachse 10 angedeutet.

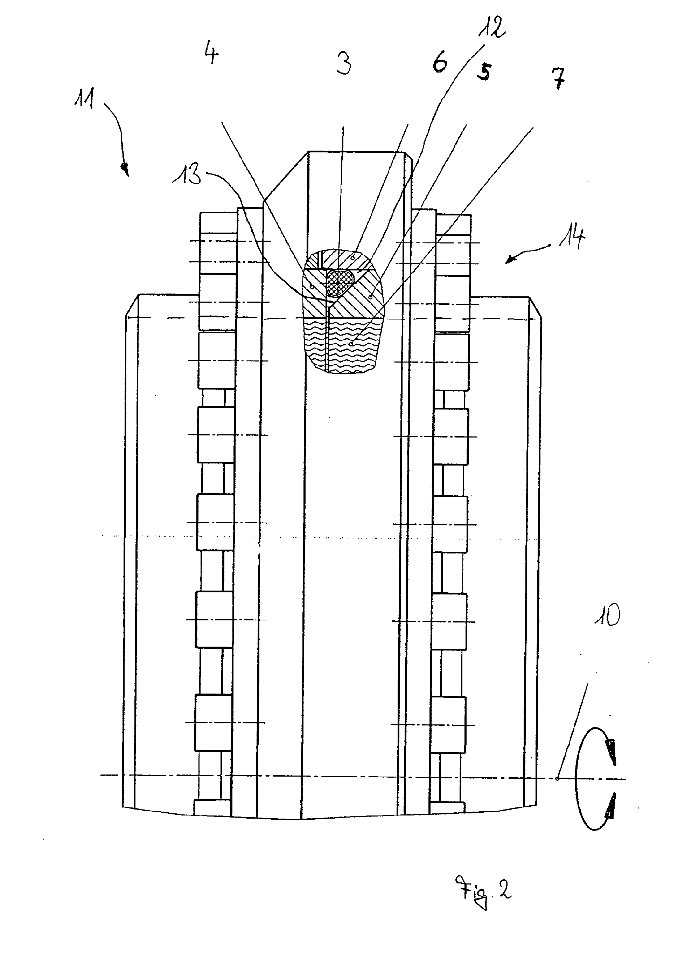

Figur 2 zeigt ein zweites Rohrdrehgelenk 11, welches die technische Lehre gemäß der Erfindung implementiert aufweist. Gleiche Bauteile werden hierbei mit gleichem Bezugszeichen verwendet. Die Dichtung 3 ist in einer dreiecksförmigen Dichtungskammer 12 angeordnet. Die dreiecksförmige Dichtungskammer 12 wird hierbei durch das erste Werkstück 4, das zweite Werkstück 5 und das dritte Werkstück 6 gebildet. Im Inneren des Rohrdrehgelenkes 11 fließt wiederum ein flüssiges Medium 7, welches Feststoffanteile aufweist. Dadurch jedoch, dass das erste Werkstück 4 und das zweite Werkstück 5 einen Dichtungsspalt bilden, durch den das flüssige Medium hindurch treten muss, ist eine Angriffsmöglichkeit an der Dichtung 3 durch die in dem flüssigen Medium 7 enthaltenen Feststoffe eingeschränkt. Durch eine geringe Spaltbreite zwischen dem ersten Werkstück 4 und dem zweiten Werkstück 5 kann es sogar gelingen, dass ein Eindringen von Feststoffen in die dreiecksförmige Dichtungskammer 12 verhindert, zumindest aber erschwert wird. So wie dargestellt, ist eine Schräge 13 am zweiten Werkstück 5 ausgebildet. Die Dichtung 3 liegt auf dieser Schräge 13 auf. Einer radiale Begrenzung erfährt die Dichtung 3 dadurch, dass das dritte Werkstück 6 ein mögliches Ausweichen der Dichtung 3 nach außen verhindert. Insbesondere bilden die Schräge 13 sowie die Gestaltung des dritten Werkstückes 6 zusammen einen Klemmspalt. In diesem Klemmspalt kann die Dichtung 3 eingeklemmt werden, so dass aufgrund der Deformation des Dichtungsmaterials die Dichtung 3 selbstständig in dem Klemmspalt verbleibt. Durch das Zusammenwirken mit dem ersten Werkstück 4 wird die so gebildete Dichtungskammer 12 abgeschlossen. Die erste Drehhälfte 14 kann sich somit drehen, wobei aufgrund der Klemmung der Dichtung 3 in dem Klemmspalt diese mitgedreht wird. Dadurch gleitet die Dichtung 3 entlang der Oberfläche des ersten Werkstückes 4. Die Klemmung im Klemmspalt ermöglicht somit zum einen, dass die Dichtung 3 festgehalten wird, zum anderen eine tatsächliche Reibung sich nur aufgrund der gleitenden Bewegung zwischen der Dichtung 3 einerseits und der Oberfläche des ersten Werkstückes 4 einstellt. Eine beidseitige Beanspruchung der Dichtung 3, wie sie in Figur 1 hervorgeht, ist bei dieser konstruktiven Lösung aus Figur 2 verhindert.

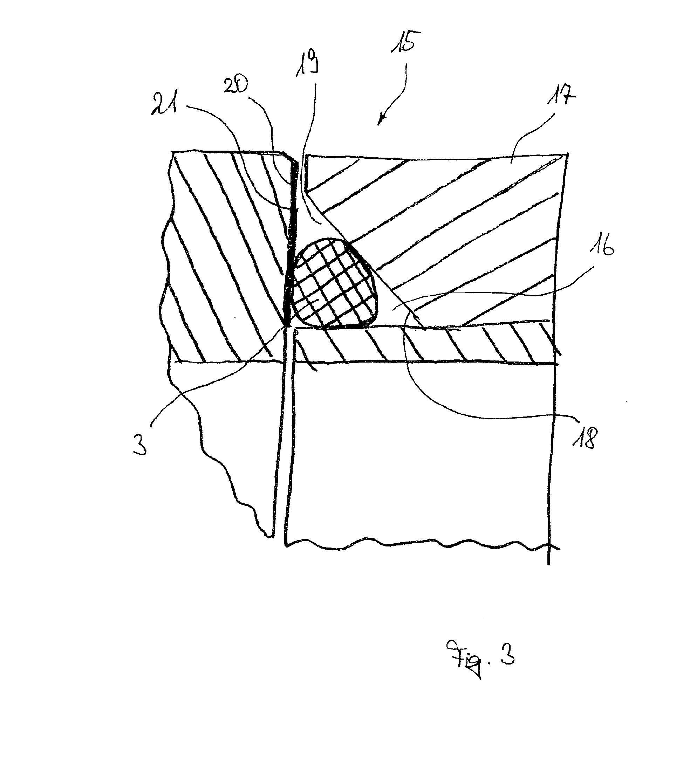

Figur 3 zeigt ein Dichtungssystem 15. Diese Ausgestaltung des Dichtungssystems 15 weist einen Klemmspalt 16 auf, der durch ein zusammengesetztes Werkstück 17 gebildet wird. Der Verlauf des Klemmspalts 16 ist hierbei so, dass die Schräge 18 entgegengesetzt verläuft zu derjenigen, wie sie aus Figur 2 hervorgeht. Gegenüber liegend angeordnet zur Schräge 18 ist ein die dreiecksförmige Dichtungskammer 19 abschließende Gegenfläche 20 angeordnet. Diese Gegenfläche 20 weist eine Beschichtung 21 auf. Die Beschichtung 21 ist in der Lage, eine Reibung mit der Dichtung 3 so zu verringern, dass bei einer Relativbewegung zwischen der Fläche 20 und der Dichtung 3 ein möglicher Verschleiß minimiert wird.

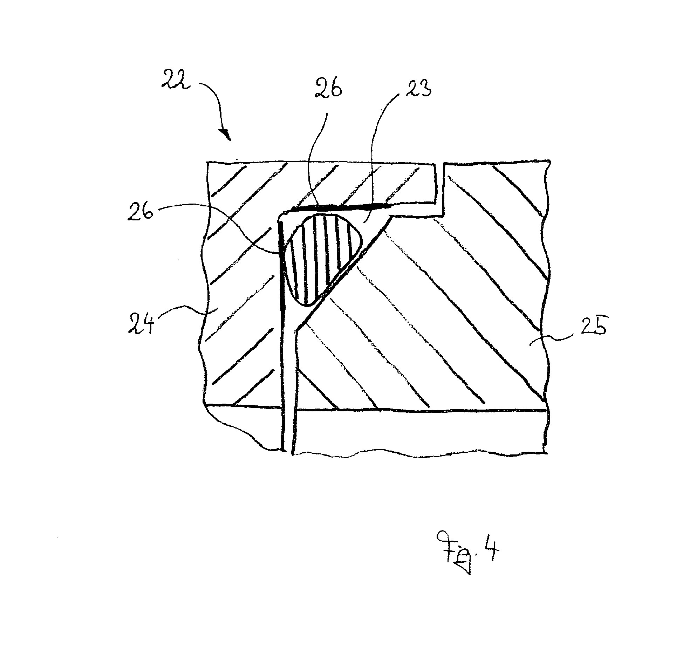

Figur 4 zeigt eine weitere Ausgestaltung eines Dichtungssystems 22. Eine dreiecksförmige Dichtungskammer 23 wird hier durch zwei einzelne Werkstücke 24,25 gebildet. Eine Geometrie im Werkstück 24 bildet aufeinander stoßende Flächen, die jeweils eine Beschichtung 26 aufweisen. Es besteht beispielsweise die Möglichkeit, dass das Werkstück 24 sich bewegt, wohingegen das Werkstück 25 feststeht.

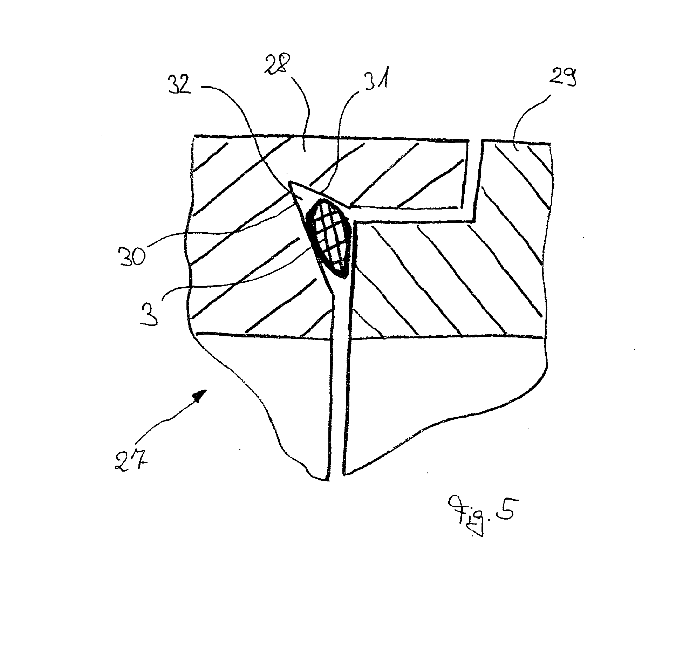

Figur 5 zeigt ein anderes Dichtungssystem 27. Dieses Dichtungssystem 27 umfasst wiederum zwei Werkstücke 28, 29. Im Werkstück 28 sind zwei Schrägflächen 30, 31 angeordnet. Die beiden Schrägflächen 30, 31 bilden einen Klemmspalt 32. Der Klemmspalt weist die aufeinander laufenden beiden Klemmflächen in einem Winkel von kleiner 90° auf. Die Dichtung 3 kann daher eine besonders starke Klemmkraft in diesem Klemmspalt 32 erhalten. Des Weiteren ermöglicht eine derartige Geometrie eines Klemmspaltes 32 einer dreiecksförmigen Dichtungskammer ebenfalls die Verwendung von an derartige Spaltgeometrien angepassten Dichtungen, insbesondere von vorgeformten Dichtungen, die im Bereich der Spaltgeometrie über eine besonders harte Oberfläche verfügen, wohingegen gegenüberliegend zu dem Werkstück 29 das Material der Dichtung 3 besonderes glatt und damit verschleißfest ausgestaltet ist.

Die aus den einzelnen Ausgestaltungen hervorgehenden Merkmale können beispielsweise auch in einem Nachrüstsatz Verwendung finden. Insbesondere kann mittels eines Nachrüstsatzes ein Rohrdrehgelenk, wie es aus Figur 1 im Stand der Technik in bekannter Weise hervorgeht, umgerüstet werden, ohne dass aber das gesamte Rohrdrehgelenk als solches ausgetauscht werden müsste. Bei einigen Rohrdrehgelenken reicht es aus, diejenigen Werkstücke auszutauschen, die die Flächen bilden, mit der die dreiecksförmige Dichtungskammer gestaltet wird. Durch Einsetzen der an diese dreiecksförmige Dichtungskammer angepasste Dichtung kann sodann ein Dichtungssystem zur Anwendung gelangen, wie es beispielhaft aus der Figur 2 hervorgeht.

Das vorgeschlagene Rohrdrehgelenk ist beispielsweise in stationären Verladeeinrichtungen einsetzbar, in mobilen Verladeanlagen und Verladegeräten, aber auch beispielweise bei großtechnischen Anlagen wie zum Beispiel in Kühlungsleitungen bei Stahlwerken oder Kraftwerken.

## Patentansprüche

**1.** Rohrdrehgelenk (11) zum Transport flüssiger Medien mit zumindest einer ersten und einer zweiten Drehhälfte, die zueinander abgedichtet drehbar angeordnet sind, wofür eine kreisförmig umlaufend angeordnete Dichtung (3) in einer umlaufend angeordneten Dichtungskammer mit einer dreiecksförmigen Gestalt angeordnet ist, die Dichtung (3) auf einer Schräge einer ersten Fläche (4) und an einer zweiten Fläche (5) der Dichtungskammer anliegt, wobei die zweite Fläche (5) gegenüberliegend zu der Schräge der ersten Fläche (4) in einem nichtrechtwinkligen Verhältnis angeordnet ist, die erste Fläche (4) zu der ersten Drehhälfte und die zweite Fläche (5) zu der zweiten Drehhälfte zugehörig ist, und eine dritte Fläche (6) der Dichtungskammer eine radiale Begrenzung für die umlaufend angeordnete Dichtung bildet, wobei die Dichtungskammer derart dreiecksförmig ist, dass die Dichtung (3) zwischen der ersten und der dritten Fläche der Dichtungskammer positionsfest eingeklemmt ist, während die zweite Fläche (5) für eine Relativbewegung zwischen der ersten und der zweiten Drehhälfte gleitfähig entlang der Dichtung (3) angeordnet ist.

**2.** Rohrdrehgelenk (11) nach Anspruch 1, **dadurch gekennzeichnet, dass** die dritte Fläche (6) zur ersten Drehhälfte zugehörig ist.

**3.** Rohrdrehgelenk (11) nach Anspruch 1 oder 2, **dadurch gekennzeichnet, dass** die zweite Fläche (5) eine bessere Oberflächengüte aufweist als die erste und/oder die dritte Fläche (4, 6).

**4.** Rohrdrehgelenk (11) nach einem der vorhergehenden Ansprüche, **dadurch gekennzeichnet, dass** die zweite Fläche (5) eine Oberflächenbeschichtung aufweist.

**5.** Rohrdrehgelenk (11) nach einem der vorhergehenden Ansprüche, **dadurch gekennzeichnet, dass** die umlaufende Dichtung (3) eine O-Dichtung ist.

**6.** Rohrdrehgelenk (11) nach einem der vorhergehenden Ansprüche, **dadurch gekennzeichnet, dass** die erste (4) und die dritte (6) Fläche zugehörig zu der ersten Drehhälfte an jeweils verschiedenen Werkstücken gefertigt sind, die zusammengesetzt in der ersten Drehhälfte angeordnet sind.

**7.** Rohrdrehgelenk (11) nach einem der vorhergehenden Ansprüche, **dadurch gekennzeichnet, dass** zwischen der ersten und der zweiten Drehhälfte von einem Innendurchmesser aus ein Spalt radial nach außen im Rohrdrehgelenk (11) verläuft, der zur dreiecksförmigen Dichtungskammer führt, in dem die Dichtung (3) angeordnet ist, die einen Durchfluss des flüssigen Mediums durch den Spalt über die Dichtungskammer hinaus verhindert.

**7.** Verfahren zur Abdichtung einer ersten und einer zweiten Drehhälfte eines Rohrdrehgelenks (11) zueinander, wobei das Rohrdrehgelenk (11) zur Weiterleitung von flüssigen Medien eingesetzt wird, mit den folgenden Schritten:
- in die erste Drehhälfte wird eine umlaufende Dichtung in eine dortige Ausnehmung eingesetzt, wobei die Ausnehmung eine erste Fläche mit einer Schräge und eine radiale Begrenzung aufweist, wobei die Dichtung (3) zwischen der Schräge und der radialen Begrenzung eingepresst wird,
- die zweite Drehhälfte wird mit der ersten Drehhälfte verbunden, wobei die umlaufende Dichtung (3) eine Presskraft erfährt und eine dichtende Wirkung zwischen der ersten und der zweiten Drehhälfte entfaltet.

**8.** Verfahren nach Anspruch 7, **dadurch gekennzeichnet, dass** die umlaufende Dichtung (3) zumindest im wesentlichen in ihrer eingeklemmten Position ortsfest verbleibt und die zweite Fläche (5) auf ihr gleitet, wenn eine Relativbewegung zwischen der ersten und der zweiten Drehhälfte ausgeführt wird.

**9.** Verfahren nach Anspruch 7 oder 8, **dadurch gekennzeichnet, dass** beim Verbinden von erster und zweiter Drehhälfte miteinander eine Dichtungskammer mit einer dreieckförmigen Gestalt gebildet wird.

**10.** Nachrüstsatz für ein Rohrdrehgelenk (11), wobei der Nachrüstsatz ein oder mehrere Bauteile umfasst, damit ein Rohrdrehgelenk (11) mit einem Dichtungssystem ermöglicht ist, wie es aus einem der vorherigen Ansprüche hervorgeht.
